# EUROPEAN PATENT SPECIFICATION

(11) **EP 3 291 610 B1**
(45) Date of publication and mention of the grant of the patent: **03.03.2021**
(21) Application number: 15890657.8
(22) Date of filing: 24.12.2015
(51) Int. Cl.: H04W 48/18, H04W 36/00, H04W 4/00, H04W 84/10

(54) **SELECTIVE PRIORITIZATION OF A LOCAL OR A GLOBAL CORE NETWORK**
SELEKTIVE PRIORISIERUNG EINES LOKALEN ODER GLOBALEN KERNNETZES
PRIORISATION SÉLECTIVE D'UN COEUR DE RÉSEAU LOCAL OU GLOBAL

(30) Priority: 30.04.2015 CN 201510217815
(43) Date of publication of application: 07.03.2018
(73) Proprietor: ZTE Corporation, Shenzhen, Guangdong 518057 (CN)
(72) Inventor: ZHENG, Fangting, Shenzhen Guangdong 518057 (CN); ZONG, Zaifeng, Shenzhen Guangdong 518057 (CN); WU, Se, Shenzhen Guangdong 518057 (CN); QIANG, Yuhong, Shenzhen Guangdong 518057 (CN)
(74) Representative: Lavoix
(86) International application number: PCT/CN2015/098735
(87) International publication number: WO 2016/173283

(56) References cited:
- WO-A1-2014/003436
- WO-A1-2014/177208
- CN-A- 101 141 354
- CN-A- 102 209 358
- US-A1- 2013 188 604
- US-A1- 2014 086 177
- US-A1- 2014 098 736
- KONSTANTINOS SAMDANIS ET AL: "Traffic Offload Enhancements for eUTRAN", IEEE COMMUNICATIONS SURVEYS AND TUTORIALS, INSTITUTE OF ELECTRICAL AND ELECTRONICS ENGINEERS, US, vol. 14, no. 3, 1 July 2012 (2012-07-01), pages 884-896, XP011454973, ISSN: 1553-877X, DOI: 10.1109/SURV.2011.072711.00168
- John Kaippallimalil ET AL: "Network virtualization and direct Ethernet transport for packet data network connections in 5G wireless", 2014 IEEE Global Communications Conference, 1 December 2014 (2014-12-01), pages 1836-1841, XP055510403, DOI: 10.1109/GLOCOM.2014.7037075 ISBN: 978-1-4799-3512-3

## Description

### TECHNICAL FIELD

The present disclosure relates, but is not limited, to the field of mobile communications, and in particular to a method and device for accessing a Core Network (CN) of hierarchical deployment.

### BACKGROUND

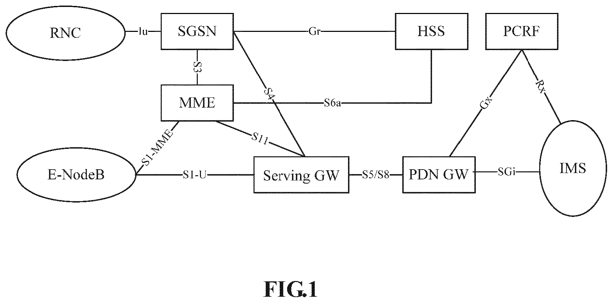

As shown in FIG.1, System Architecture Evolution (SAE), which is a project for a next-generation mobile radio network in 3rd Generation Partnership Project (3GPP), may include network elements (NE) as follows.

An Evolved Radio Access Network (E-RAN) may provide radio transmission of increased reliability with an increased uplink and /or downlink rate and a reduced transmission delay. An NE included in the E-RAN may be an Evolved NodeB (eNodeB, eNB), which provides radio resources for access by User Equipment (UE).

A Home Subscriber Server (HSS) may permanently store subscription data of a subscriber.

A Mobility Management Entity (MME) may be a control-plane functionality and a server for temporarily storing subscriber data. An MME may manage and store UE context (such as UE/subscriber identifier, a status of mobility management, a subscriber security parameter, etc.). An MME may allocate a temporary identifier to a subscriber when UE camps in a tracking area or a network is to authenticate the subscriber. An MME may process any non-access-layer messages between UE and the MME. An MME may trigger SAE paging.

A Serving Gateway (GW) may be a subscriber-plane entity for routing subscriber-plane data and terminating downlink data of idle UE. A serving GW may manage and store SAE bearer context of UE, such as an Internet Protocol (IP) bearer service parameter and intra-network routing information. A serving GW may be a subscriber-plane anchor in a 3GPP system. A subscriber may have but one serving GW at a time.

A Packet Data Network (PDN) GW may be responsible for PDN access by UE and allocating an IP address to a subscriber. A PDN GW may be a mobility anchor for a 3GPP access system and a non-3GPP access system. A subscriber may access more than one PDN GW at a time.

A Policy and Charging Rule Functionality (PCRF) may generate, according to service information, subscription information of a subscriber, and configuration information of an operator, a billing rule and a rule for controlling Quality of Service (QoS) associated with delivery of subscriber data. A PCRF may also control establishment and release of a bearer in an access network.

Each of a 2G mobile network to a 4G mobile network may include a Core Network (CN) providing network access to UE. A CN may generally provide high capacity and /or high throughput, aggregate a large number of radio accesses, and adopt localized deployment. Localized deployment of a CN is advantageous in that it requires but simple network construction, unified data planning, and easy maintenance. A downside of localized deployment of a CN is that it leads to a long path of subscriber data, which lowers service experience of a subscriber. Moreover, with localized deployment of a CN, any change may trigger a domino effect. Update and /or replacement of a CN may generate a huge impact.

3GPP may further introduce, in an Evolved Packet Core (EPC), Local IP Access (LIPA) and Selected IP Traffic Offload (SIPTO), as well as a Local GateWay (LGW). Subscriber data may access a service straightforwardly through an LGW, leading to a shorter path of subscriber data. Introduction of an LGW in 4G network architecture is not complete, and may serve as but a supplement to network deployment by an operator. For example, a control-plane flow of UE may still depend on an MME and /or an SGW of localized deployment.

At present, many international organizations start research on a next-generation mobile network. A subscriber end-to-end delay may serve as a vital index of assessment. It is of major importance to reduce a delay of a subscriber by virtue of network architecture.

According to Kongstantinos Samdanis et al: "Traffic Offload Enhancements for Eutran", IEEE COMMUNICATIONS SURVEYS & TUTORIALS, VOL. 14, NO.3, THIRD QUARTER 2012, pages 884-896, XP011454973, architectures, traffic handling, QoS support, data offload gateway selection, service planning and deployment, and service continuity for LIPA and SIPTO are presented.

US 2013/188604 A1 discloses residential/enterprise network connection management and handover scenarios; managing LIPA and/or SIPTO connection releases when UE moves out of residential/enterprise network coverage in case service continuity is not supported for the LIPA/SIPTO PDN connection(s), where to address problems caused by not providing service continuity for LIPA/SIPTO PDN connections, the PDN connection/PDP context created in the HeNB/HNB by the MME/SGSN includes context information related to the UE indicating whether such connection is a LIPA PDN connection PDN connection; when the MME receives a handover request from a source base station, if it determines that the active PDN connections are LIPA PDN connections and that LIPA PDN continuity cannot be supported towards the target cell, the MME rejects the handover and sends a Failure message to the source base station.

### SUMMARY

Following is an overview of a subject elaborated herein. The overview is not intended to limit the scope of protection of the claims.

Embodiments herein provide a method and device for accessing a service network, and a Base Station (BS), capable of reducing a delay of a subscriber.

The features of the method and device according to the present disclosure are defined in the independent claims, and the preferable features according to the present invention are defined in the dependent claims.

Embodiments herein provide a method and device for accessing a service network, and a Base Station (BS), implementing hierarchical deployment of service networks, thereby reducing a delay of a subscriber.

The invention is defined in the appended set of claims.

Any other aspect herein may be understood upon viewing the drawings and the detailed description.

### BRIEF DESCRIPTION OF THE DRAWINGS

FIG.1 is a diagram of architecture of an EPC in related art.
FIG.2 is a diagram of architecture of a service network according to an embodiment herein.
FIG.3 is a diagram of architecture in a 4G mobile network according to an embodiment herein.
FIG.4 is a flowchart of accessing a service network according to an embodiment herein.
FIG.5 is a flowchart of accessing a service network according to an embodiment herein.
FIG.6 is a flowchart of accessing a service network according to an embodiment herein.
FIG.7 is a flowchart of accessing a service network according to an embodiment herein.
FIG.8 is a flowchart of accessing a service network according to an embodiment herein.
FIG.9 is a flowchart of accessing a service network according to an embodiment herein.
FIG.10 is a diagram of a device for accessing a service network according to an embodiment herein.

### DETAILED DESCRIPTION

Embodiments herein are elaborated below with reference to the drawings. Embodiments herein and features thereof may be combined with each other as long as no conflict results from the combination.

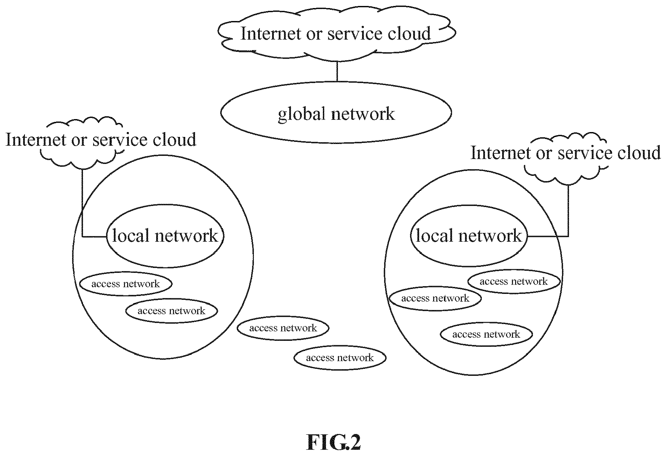

FIG.2 is a diagram of architecture of a service network according to an embodiment herein. As shown in FIG.2, a service network may be a local network or a global network.

A local network and a global network may be deployed independent of each other. A local network may be geographically closer to an access network to cover a specific area. A global network may cover a wider area, and may be constructed and operated in a localized manner.

A local network may relate to one or more visible physical entities, one or more software functionalities run in a physical equipment entity that are implemented by virtualization, or a software functionality run in a physical entity of access equipment (such as an eNB).

A global network may relate to one or more visible physical entities, one or more software functionalities run in a physical equipment entity that are implemented by virtualization, or a software functionality run in a physical entity of service cloud.

The service network may be a CN under architecture of a 2G, 3G, 4G mobile network, or functionality in a next-generation network that provides a network connection service to UE.

One physical location may be covered simultaneously by both a local network and a global network. At an initial access by UE, an access network may select a local network or a global network for the UE according to a selectable policy or a policy designated by an operator. The UE may access the selected local or global network. The policy may include at least one of: an attribute of the UE, a service requested by the UE, a load of a service network, and a status of the service network. The attribute of the UE may include at least one of: UE of Internet of Things, UE of Internet of Vehicles, UE for industrial control, telemedicine UE, and UE of low mobility. The service requested by the UE may include at least one of: a mobile-Internet service, a Virtual Private Network (VPN) service, a service of Internet of Things, a service of Internet of Vehicles, an industrial-control service, a telemedicine service, a voice service, etc.

UE movement in a local network or a global network may follow a related service flow.

When idle UE moves out of an area covered by a serving BS (eNodeB), into an area covered by another BS, it may be prioritized that the idle UE accesses a service network of a type identical to that of a service network previously accessed by the idle UE. When there is no service network of the type or the service network of the type is unavailable, a service network may be re-selected for the idle UE.

A service network may be re-selected as follows. The UE may be notified by the network to get detached and then reattach to another network. Another network may be re-selected during update of a tracking area, by having, according to a list of tracking areas, the UE automatically send a request to update the tracking area when moving out of coverage of the local /global network.

The access network may acquire the attribute of the UE, the service requested by the UE, another policy factor, etc., in access signaling sent by the UE. The access network may acquire the load of a service network and the status of the service network by end-to-end detection. A service network may notify the access network of the load and the status of the service network.

With the method according to an embodiment herein, service networks may be deployed hierarchically, and a service network may be selected according to a policy of the access network, improving service experience of a subscriber, reducing pressure associated with localized deployment of a service network.

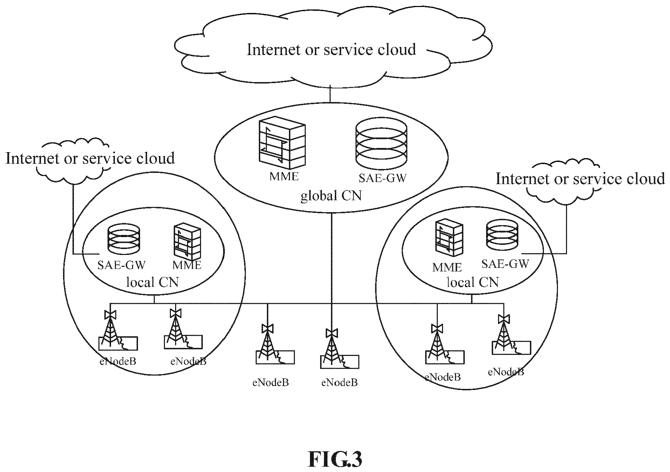

FIG.3 shows architecture in a 4G mobile network according to an embodiment herein.

An EPC network may be deployed hierarchically according to characteristics and a requirement of a service. A local CN may be deployed in a specific area, such as a crowded area (e.g., a campus, a stadium, etc.), or an area with a dense collection of equipment of Internet of Things (e.g., a factory, a community, etc.). Meanwhile, the area covered by the local CN may be covered simultaneously by a global CN constructed by an operator in a localized manner. An eNB in the area may be connected to both the local CN and the global CN. A subscriber may attempt access from an eNB in a specific area. The eNB may determine, according to a policy, whether to admit the subscriber into a local CN or the global CN. The policy may include at least one of: an attribute of the UE, a service requested by the UE, a load of a service network, and a status of the service network. The attribute of the UE may include at least one of: UE of Internet of Things, UE of Internet of Vehicles, UE for industrial control, telemedicine UE, and UE of low mobility. The service requested by the UE may include at least one of: a mobile-Internet service, a Virtual Private Network (VPN) service, a service of Internet of Things, a service of Internet of Vehicles, an industrial-control service, a telemedicine service, a voice service, etc.

UE of Internet of Things may be prioritized to be admitted into a local CN.

UE of Internet of Vehicles may be prioritized to be admitted into the global CN.

UE of low mobility may be prioritized to be admitted into a local CN.

UE of none of the above may be prioritized to be admitted into the global CN.

UE requesting a VPN service may be prioritized to be admitted into a CN connected to a VPN.

UE requesting a voice service may be prioritized to be admitted into the global CN.

UE of none of the above may be prioritized to be admitted into the global CN.

UE may be admitted into the global CN when a local network is heavily loaded or unavailable.

UE may be admitted into a local CN when the global network is heavily loaded or unavailable.

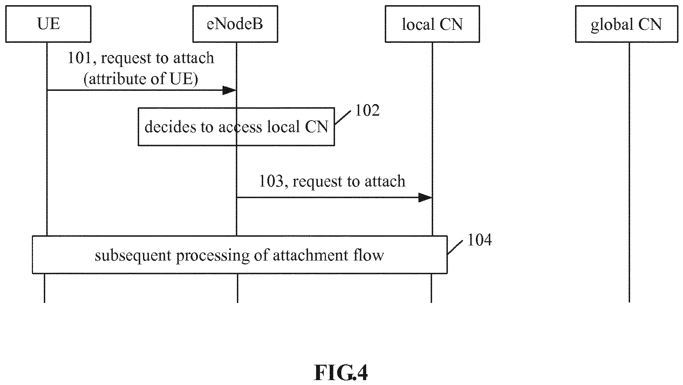

As shown in FIG.4, according to an embodiment herein (with architecture of a 4G network as an example), an eNB may choose to admit UE into a local CN according to an attribute of the UE.

In step S101, UE, covered by an eNB connected to both a local CN and a global CN, may initiate a request to attach. The request to attach may include an attribute of the UE.

In step S102, the eNB may decide to admit the UE into the local CN according to the attribute of the UE.

In step S103, the eNB may forward, to the local CN, the request to attach sent by the UE.

In step S104, the local CN may admit a subscriber of the UE according to a 4G attachment flow.

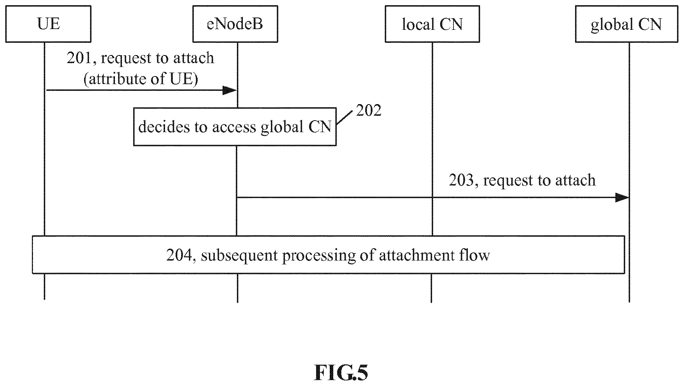

As shown in FIG.5, according to an embodiment herein (with architecture of a 4G network as an example), an eNB may choose to admit UE into a global CN according to an attribute of the UE.

In step S201, UE, covered by an eNB connected to both a local CN and a global CN, may initiate a request to attach. The request to attach may include an attribute of the UE.

In step S202, the eNB may decide to admit the UE into the global CN according to the attribute of the UE.

In step S203, the eNB may forward, to the global CN, the request to attach sent by the UE.

In step S204, the global CN may admit a subscriber of the UE according to a 4G attachment flow.

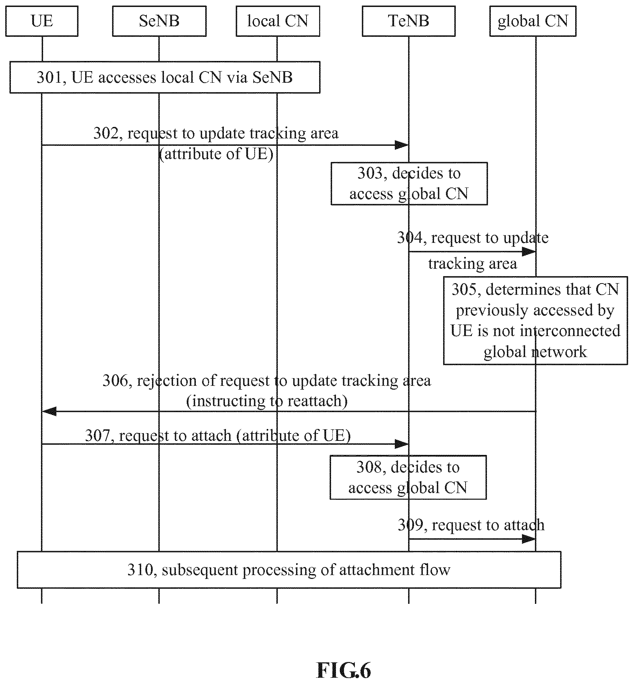

As shown in FIG.6, according to an embodiment herein (with architecture of a 4G network as an example), when idle UE moves, a network side may re-select a service network for the idle UE by reattachment, switching the idle UE from a local CN to a global CN.

In step S301, UE may access a Source eNodeB (SeNB) and establish a connection with a local CN. The UE may be in an idle status.

In step S302, the idle UE may move into an area covered by a Target eNodeB (TeNB). The TeNB may be connected but to a global CN. The idle UE may initiate a request to update a tracking area including an attribute of the idle UE.

In step S303, the TeNB may find, according to the attribute of the idle UE, that prioritized access of the local CN is unavailable, and may decide to admit the idle UE into the global CN.

In step S304, the TeNB may send, to the global CN, a request to update the tracking area.

In step S305, the global CN may determine that a CN previously accessed by the idle UE is not an interconnected global network, and that communication with the CN previously accessed by the idle UE is unavailable.

In step S306, the global CN may return, to the idle UE, a rejection of the request to update the tracking area, instructing the idle UE to reattach.

In step S307, the idle UE may further initiate a request to attach. The request to attach may include the attribute of the idle UE.

In step S308, the TeNB may decide to admit the idle UE into the global CN.

In step S309, the TeNB may forward, to the global CN, the request to attach.

In step S310, the global CN may admit a subscriber of the UE according to a 4G attachment flow.

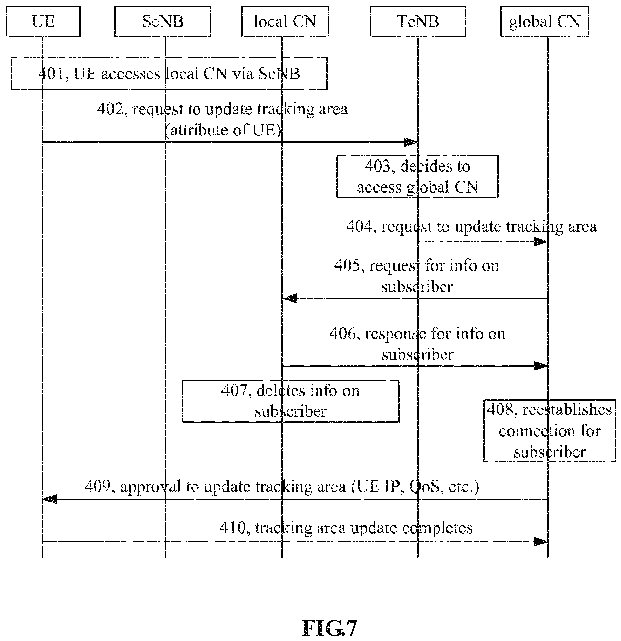

As shown in FIG.7, according to an embodiment herein (with architecture of a 4G network as an example), when idle UE moves, a network side may re-select a service network for the idle UE during update of a tracking area, switching the idle UE from a local CN to a global CN.

In step S401, UE may access a SeNB and establish a connection with a local CN. The UE may be in an idle status.

In step S402, the idle UE may move into an area covered by a TeNB. The TeNB may be connected but to a global CN. The idle UE may initiate a request to update a tracking area including an attribute of the idle UE.

In step S403, the TeNB may find, according to the attribute of the idle UE, that prioritized access of the local CN is unavailable, and may decide to admit the idle UE into the global CN.

In step S404, the TeNB may send, to the global CN, a request to update the tracking area.

In step S405, the global CN may acquire, from the local CN, information on a subscriber of the idle UE.

In step S406, the local CN may send, to the global CN, the information on the subscriber.

In step S407, the local CN may delete the information on the subscriber in a local network. The information on the subscriber may include context associated with mobility management, bearer context of the subscriber, etc.

In step S408, the global CN may reconstruct, for the subscriber, context associated with mobility management. The global CN may reconstruct, for the subscriber, bearer context.

In step S409, the global CN may return, to the subscriber, an approval to update the tracking area. The approval to update the tracking area may include bearer information reconstructed for the subscriber, such as an IP address of the subscriber, QoS, etc.

In step S410, the UE may return a message indicating that tracking area update completes.

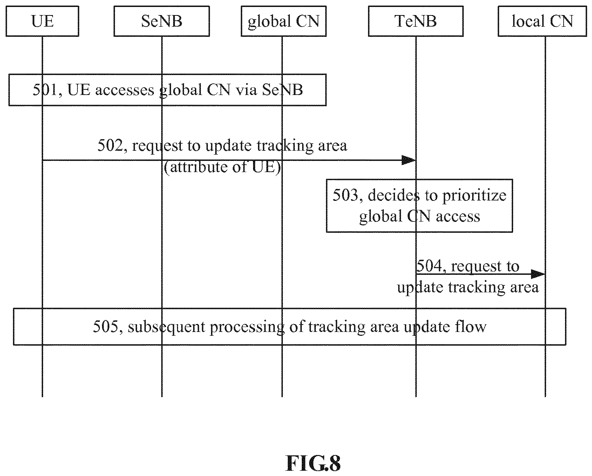

As shown in FIG.8, according to an embodiment herein (with architecture of a 4G network as an example), when idle UE moves, a service network previously accessed by the idle UE may be preferably selected for a subscriber of the idle UE.

In step S501, UE may access a SeNB and establish a connection with a global CN. The UE may be in an idle status.

In step S502, the idle UE may move into an area covered by a TeNB. The TeNB may be connected to both the global CN and a local CN. The idle UE may initiate a request to update a tracking area including an attribute of the idle UE.

In step S503, the TeNB may prioritize, according to the attribute of the idle UE and information on a network previously accessed by the idle UE, access of the global CN by the idle UE.

In step S504, the TeNB may send, to the global CN, a request to update the tracking area.

In step S505, the global CN may admit a subscriber of the idle UE according to a 4G tracking area update flow.

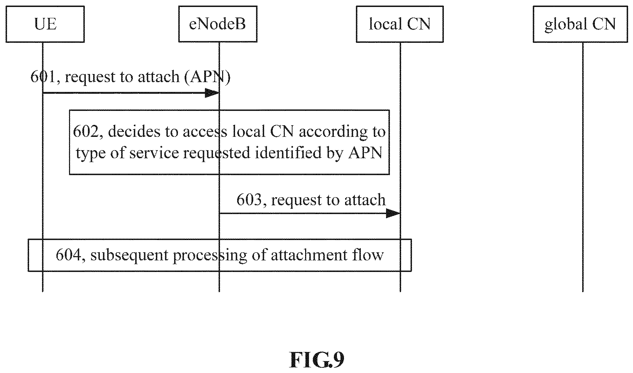

As shown in FIG.9, according to an embodiment herein (with architecture of a 4G network as an example), the eNB uses the policy of a service requested by the UE to select the local CN for the UE to access.

In step S601, UE, covered by an eNB connected to both a local CN and a global CN, may initiate a request to attach. The request to attach may include an Access Point Name (APN).

In step S602, the eNB may decide to admit the UE into the local CN according to a type of a service requested by the UE as indicated by the APN.

In step S603, the eNB may forward, to the local CN, the request to attach sent by the UE.

In step S204, the local CN may admit a subscriber of the UE according to a 4G attachment flow.

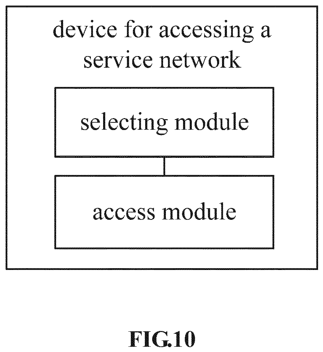

FIG.10 is a diagram of a device for accessing a service network according to an embodiment herein. As shown in FIG.10, the device includes a selecting module and an access module.

The selecting module is arranged for: at an initial access by UE, selecting, for the UE according to a policy, a service network. The service network includes at least one of a local network and a global network.

The access module is arranged for: allowing the UE to access the selected service network.

The policy may be an attribute of the UE, a service requested by the UE, a load of a service network, a status of the service network, etc.

The attribute of the UE may be UE of Internet of Things, UE of Internet of Vehicles, UE for industrial control, telemedicine UE, UE of low mobility, etc.

The service requested by the UE may be a mobile-Internet service, a Virtual Private Network (VPN) service, a service of Internet of Things, a service of Internet of Vehicles, an industrial-control service, a telemedicine service, a voice service, etc.

The selecting module may be further arranged for: in response to determining that idle UE moves out of an area covered by a serving Base Station (BS), into an area covered by another BS, allowing the idle UE to access a service network of a type identical to that of a service network previously accessed by the idle UE; in response to determining that there is no service network of the type or the service network of the type is unavailable, re-selecting a service network for the idle UE.

The selecting module may be arranged for re-selecting the service network for the idle UE by notifying the idle UE to get detached and then reattach to the re-selected service network.

The selecting module may be arranged for re-selecting the service network for the idle UE during update of a tracking area.

A BS according to an embodiment herein includes an aforementioned device for accessing a service network.

A computer-readable storage medium according to an embodiment herein has stored therein computer-executable instructions for performing an aforementioned method for accessing a service network.

Those skilled in the art may understand that all or part of the steps of the method may be completed by instructing a related hardware through a program. The program may be stored in a transitory or non-transitory computer-readable storage medium. The computer-readable storage medium may be Read-Only Memory (ROM), a magnetic disk, a CD, and/or the like. All or part of the steps in an aforementioned embodiment may be implemented using one or more Integrated Circuits. A unit or module in an aforementioned embodiment may be implemented in form of hardware or a software functional module. The present disclosure is not limited to any specific combination of hardware and software.

What disclosed are merely embodiments herein. The disclosure may have other embodiments.

The invention is defined in the appended set of claims.

### Industrial Applicability

An aforementioned technical solution implements hierarchical deployment of service networks, thereby reducing a delay of a subscriber.

The selecting module may be arranged for re-selecting the service network for the idle UE by notifying the idle UE to get detached and then reattach to the re-selected service network.

The selecting module may be arranged for re-selecting the service network for the idle UE during update of a tracking area.

A BS according to an embodiment herein includes an aforementioned device for accessing a service network.

A computer-readable storage medium according to an embodiment herein has stored therein computer-executable instructions for performing an aforementioned method for accessing a service network.

Those skilled in the art may understand that all or part of the steps of the method may be completed by instructing a related hardware through a program. The program may be stored in a transitory or non-transitory computer-readable storage medium. The computer-readable storage medium may be Read-Only Memory (ROM), a magnetic disk, a CD, and/or the like. All or part of the steps in an aforementioned embodiment may be implemented using one or more Integrated Circuits. A unit or module in an aforementioned embodiment may be implemented in form of hardware or a software functional module. The present disclosure is not limited to any specific combination of hardware and software.

What disclosed are merely embodiments herein. The disclosure may have other embodiments. Those skilled in the art may make various modifications and variations to the present disclosure without departing from the present disclosure and such modifications and variations shall fall within the scope of the claims.

### Industrial Applicability

An aforementioned technical solution implements hierarchical deployment of service networks, thereby reducing a delay of a subscriber.

## Claims

1. A method for accessing a Core Network, CN, of hierarchical deployment, the method comprising:
acquiring, by an Evolved NodeB, eNB, a load of a CN by end-to-end detection, or by being notified by the CN of the load, wherein the CN comprises a local CN and a global CN deployed hierarchically, wherein the local CN is geographically closer to the eNB than the global CN to cover a specific area, wherein the global CN is constructed and operated in a localized manner, wherein the local CN is deployed in the specific area which comprises at least one of a crowded area or an area with a dense collection of equipment of Internet of Things, wherein the specific area covered by the local CN is covered simultaneously by the global CN, wherein the eNB is in the specific area and is connected to both the local CN and the global CN;
at an initial access by User Equipment, UE, selecting, by the eNB, the local CN or the global CN for the UE according to a policy, wherein the policy comprises: both an attribute of the UE and the load of the CN; and
allowing, by the eNB, the UE to access the local CN or the global CN that has been selected, wherein the eNB acquires the attribute of the UE in access signaling sent by the UE, wherein the attribute of the UE comprises at least one of: UE of Internet of Things, UE of Internet of Vehicles, and UE of low mobility,
wherein the selecting, by the eNB, the local CN or the global CN for the UE according to the policy comprises at least one of:
prioritizing the UE of Internet of Things to be admitted into the local CN;
prioritizing the UE of Internet of Vehicles to be admitted into the global CN; or
prioritizing the UE of low mobility to be admitted into the local CN.

2. The method according to claim 1, further comprising:
in response to determining that the UE is in an idle status and moves out of an area covered by a serving eNB, into an area covered by another eNB, prioritizing that the UE accesses a CN of a type identical to that of a CN previously accessed by the UE; in response to determining that there is no CN of the type or the CN of the type is unavailable, re-selecting a CN for the UE, wherein the CN of the type identical to that of the CN previously accessed by the UE is the local CN or the global CN.

3. The method according to claim 2, wherein the re-selecting a CN for the UE comprises:
notifying the UE to get detached and then reattach to the re-selected CN.

4. The method according to claim 2, wherein the re-selecting a CN for the UE comprises:
re-selecting the CN for the UE during update of a tracking area.

5. A device for accessing a Core Network, CN, of hierarchical deployment, the device being comprised in an Evolved NodeB, eNB, the device comprising:
a selecting module arranged for:
acquiring a load of a CN by end-to-end detection, or by being notified by the CN of the load, wherein the CN comprises a local CN and a global CN deployed hierarchically, wherein the local CN is geographically closer to the eNB than the global CN to cover a specific area, wherein the global CN is constructed and operated in a localized manner, wherein the local CN is deployed in the specific area which comprises at least one of a crowded area or an area with a dense collection of equipment of Internet of Things, wherein the specific area covered by the local CN is covered simultaneously by the global CN, wherein the eNB is in the specific area and is connected to both the local CN and the global CN; and
at an initial access by User Equipment, UE, selecting the local CN or the global CN for the UE according to a policy, wherein the policy comprises: both an attribute of the UE and the load of the CN; and
an access module arranged for: allowing the UE to access the local CN or the global CN that has been selected,
wherein the eNB acquires the attribute of the UE in access signaling sent by the UE,
wherein the attribute of the UE comprises at least one of: UE of Internet of Things, UE of Internet of Vehicles, and UE of low mobility,
wherein the selecting the local CN or the global CN for the UE according to a policy comprises at least one of:
prioritizing the UE of Internet of Things to be admitted into the local CN;
prioritizing the UE of Internet of Vehicles to be admitted into the global CN; or
prioritizing the UE of low mobility to be admitted into the local CN.

6. The device according to claim 5,
wherein the selecting module is further arranged for: in response to determining that the UE is in an idle status and moves out of an area covered by a serving eNB, into an area covered by another eNB, prioritizing that the UE accesses a CN of a type identical to that of a CN previously accessed by the UE; in response to determining that there is no CN of the type or the CN of the type is unavailable, re-selecting a CN for the UE, wherein the CN of the type identical to that of the CN previously accessed by the UE is the local CN or the global CN.

7. The device according to claim 6, wherein the selecting module is arranged for re-selecting the CN for the UE by
notifying the UE to get detached and then reattach to the re-selected CN.

8. The device according to claim 6, wherein the selecting module is arranged for re-selecting the CN for the UE by
re-selecting the CN for the UE during update of a tracking area.

9. An eNB, comprising the device according to any one of claims 5 to 8.

10. A computer-readable storage medium included in a Evolved Node B, eNB, having stored therein computer-executable instructions for performing the method according to any one of claims 1 to 4.

## Patentansprüche

1. Verfahren zum Zugreifen auf ein Kernnetz, CN, hierarchischer Verteilung, das Verfahren umfassend:
Erfassen, durch einen Evolved NodeB, eNB, einer Last eines CN durch End-zu-End-Erkennung oder durch benachrichtigt werden über die Last durch das CN, wobei das CN ein lokales CN und ein globales CN umfasst, die hierarchisch verteilt sind, wobei das lokale CN geographisch näher an dem eNB ist als das globale CN, um ein spezifisches Gebiet abzudecken, wobei das globale CN auf eine lokalisierte Weise aufgebaut ist und betrieben wird, wobei das lokale CN in dem spezifischen Gebiet verteilt ist, das mindestens eines von einem stark bevölkerten Gebiet oder einem Gebiet mit einer dichten Ansammlung von Geräten des Internets der Dinge umfasst, wobei das spezifische Gebiet, das von dem lokalen CN abgedeckt ist, gleichzeitig von dem globalen CN abgedeckt ist, wobei der eNB in dem spezifischen Gebiet ist und sowohl mit dem lokalen CN als auch mit dem globalen CN verbunden ist;
bei einem anfänglichen Zugriff durch ein Benutzergerät, UE, Auswählen, durch den eNB, des lokalen CN oder des globalen CN für das UE gemäß einer Richtlinie, wobei die Richtlinie Folgendes umfasst: sowohl ein Attribut des UE als auch die Last des CN; und
Ermöglichen, durch den eNB, eines Zugriffs des UE auf den CN oder den globalen CN, der ausgewählt wurde, wobei der eNB das Attribut des UE in der von dem UE gesendeten Zugriffssignalisierung erfasst, wobei das Attribut des UE mindestens eines von Folgenden umfasst: UE von Internet der Dinge, UE von Internet der Fahrzeuge und UE von niedriger Mobilität,
wobei das Auswählen, durch den eNB, des lokalen CN oder des globalen CN für das UE gemäß der Richtlinie mindestens eines von Folgendem umfasst:
Priorisieren des UE von Internet der Dinge, das in dem lokalen CN zugelassen werden soll;
Priorisieren des UE von Internet der Fahrzeuge, das in dem globalen CN zugelassen werden soll; oder
Priorisieren des UE von niedriger Mobilität, das in dem lokalen CN zugelassen werden soll.

2. Verfahren nach Anspruch 1, ferner umfassend:
als Reaktion auf ein Bestimmen, dass das UE in einem inaktiven Zustand ist und sich aus einem von einem bedienenden eNB abgedeckten Bereich in einen von einem anderen eNB abgedeckten Bereich bewegt, Priorisieren, dass das UE auf ein CN eines Typs zugreift, der mit dem eines CN identisch ist, auf die das UE zuvor zugegriffen hat; als Reaktion auf ein Bestimmen, dass es kein CN des Typs gibt oder das CN des Typs nicht verfügbar ist, erneutes Auswählen eines CN für das UE, wobei das CN des Typs, der mit dem CN identisch ist, auf das das UE zuvor zugegriffen hat, das lokale CN oder das globale CN ist.

3. Verfahren nach Anspruch 2, wobei das erneute Auswählen eines CN für das UE Folgendes umfasst:
Benachrichtigen des UE, getrennt zu werden und dann wieder mit dem erneut ausgewählten CN zu verbinden.

4. Verfahren nach Anspruch 2, wobei das erneute Auswählen eines CN für das UE Folgendes umfasst:
erneutes Auswählen des CN für das UE während einer Aktualisierung eines Tracking-Bereichs.

5. Vorrichtung zum Zugreifen auf ein Kernnetz, CN, hierarchischer Verteilung, wobei die Vorrichtung in einem Evolved NodeB, eNB, enthalten ist, die Vorrichtung umfassend:
ein Auswahlmodul, das für Folgendes angeordnet ist:
Erfassen einer Last eines CN durch End-zu-End-Erkennung oder durch benachrichtigt werden über die Last durch das CN, wobei das CN ein lokales CN und ein globales CN umfasst, die hierarchisch verteilt sind, wobei das lokale CN geographisch näher an dem eNB ist als das globale CN, um ein spezifisches Gebiet abzudecken, wobei das globale CN auf eine lokalisierte Weise aufgebaut ist und betrieben wird, wobei das lokale CN in dem spezifischen Gebiet verteilt ist, das mindestens eines von einem stark bevölkerten Gebiet oder einem Gebiet mit einer dichten Ansammlung von Geräten des Internets der Dinge umfasst, wobei das spezifische Gebiet, das von dem lokalen CN abgedeckt ist, gleichzeitig von dem globalen CN abgedeckt ist, wobei der eNB in dem spezifischen Gebiet ist und sowohl mit dem lokalen CN als auch mit dem globalen CN verbunden ist; und
bei einem anfänglichen Zugriff durch ein Benutzergerät, UE, Auswählen des lokalen CN oder des globalen CN für das UE gemäß einer Richtlinie, wobei die Richtlinie Folgendes umfasst: sowohl ein Attribut des UE als auch die Last des CN; und
ein Zugriffsmodul, das für Folgendes angeordnet ist: Ermöglichen eines Zugriffs des UE auf den CN oder den globalen CN, der ausgewählt wurde,
wobei der eNB das Attribut des UE in der von dem UE gesendeten Zugriffssignalisierung erfasst,
wobei das Attribut des UE mindestens eines von Folgenden umfasst: UE von Internet der Dinge, UE von Internet der Fahrzeuge und UE von niedriger Mobilität,
wobei das Auswählen des lokalen CN oder des globalen CN für das UE gemäß einer Richtlinie mindestens eines von Folgendem umfasst:
Priorisieren des UE von Internet der Dinge, das in dem lokalen CN zugelassen werden soll;
Priorisieren des UE von Internet der Fahrzeuge, das in dem globalen CN zugelassen werden soll; oder
Priorisieren des UE von niedriger Mobilität, das in dem lokalen CN zugelassen werden soll.

6. Vorrichtung nach Anspruch 5,
wobei das Auswahlmodul ferner zu Folgendem angeordnet ist: als Reaktion auf ein Bestimmen, dass das UE in einem inaktiven Zustand ist und sich aus einem von einem bedienenden eNB abgedeckten Bereich in einen von einem anderen eNB abgedeckten Bereich bewegt, Priorisieren, dass das UE auf ein CN eines Typs zugreift, der mit dem eines CN identisch ist, auf die das UE zuvor zugegriffen hat; als Reaktion auf ein Bestimmen, dass es kein CN des Typs gibt oder das CN des Typs nicht verfügbar ist, erneutes Auswählen eines CN für das UE, wobei das CN des Typs, der mit dem CN identisch ist, auf das das UE zuvor zugegriffen hat, das lokale CN oder das globale CN ist.

7. Vorrichtung nach Anspruch 6, wobei das Auswahlmodul für ein erneutes Auswählen des CN für das UE angeordnet ist, indem es das UE benachrichtigt, getrennt zu werden und dann wieder mit dem erneut ausgewählten CN zu verbinden.

8. Vorrichtung nach Anspruch 6, wobei das Auswahlmodul für ein erneutes Auswählen des CN für das UE angeordnet ist, indem es das CN für das UE während einer Aktualisierung eines Tracking-Bereichs erneut auswählt.

9. eNB, umfassend die Vorrichtung nach einem der Ansprüche 5 bis 8.

10. Computerlesbares Speichermedium, das in einem Evolved Node B, eNB, beinhaltet ist, das darin gespeicherte computerausführbare Anweisungen zum Ausführen des Verfahrens nach einem der Ansprüche 1 bis 4 aufweist.

## Revendications

1. Procédé d'accès à un réseau central, CN, de déploiement hiérarchique, le procédé comprenant :
l'acquisition, par un noeudB évolué, eNB, d'une charge d'un CN par détection de bout en bout, ou en étant notifié par le CN de la charge, dans lequel le CN comprend un CN local et un CN global déployés de manière hiérarchique, dans lequel le CN local est géographiquement plus proche de l'eNB que le CN global pour couvrir une zone spécifique, dans lequel le CN global est construit et mis en fonctionnement de manière localisée, dans lequel le CN local est déployé dans la zone spécifique qui comprend au moins l'une parmi une zone peuplée ou une zone avec une collection dense d'équipement de l'Internet des objets, dans lequel la zone spécifique couverte par le CN local est couverte simultanément par le CN global, dans lequel l'eNB est dans la zone spécifique et est connecté à la fois au CN local et au CN global ;
à un accès initial par un équipement utilisateur, UE, la sélection, par l'eNB, du CN local ou du CN global pour l'UE selon une politique, dans lequel la politique comprend : à la fois un attribut de l'UE et la charge du CN ; et
l'autorisation, par l'eNB, à l'UE d'accéder au CN local ou au CN global qui a été sélectionné, dans lequel l'eNB acquiert l'attribut de l'UE dans une signalisation d'accès envoyée par l'UE, dans lequel l'attribut de l'UE comprend au l'un parmi : un UE de l'Internet des objets, un UE de l'Internet des véhicules, et un UE de faible mobilité,
dans lequel la sélection, par l'eNB, du CN local ou du CN global pour l'UE selon la politique comprend au moins l'une parmi :
la priorisation de l'UE de l'Internet des objets à admettre dans le CN local ;
la priorisation de l'UE de l'Internet des véhicules à admettre dans le CN global ; ou
la priorisation de l'UE de faible mobilité à admettre dans le CN local.

2. Procédé selon la revendication 1, comprenant en outre :
en réponse à la détermination du fait que l'UE est dans un état de veille et sort d'une zone couverte par un eNB de desserte, jusque dans une zone couverte par un autre eNB, la priorisation du fait que l'UE accède à un CN de type identique à celui du CN auquel l'UE a précédemment accédé ; en réponse à la détermination du fait qu'il n'existe aucun CN du type ou que le CN du type est indisponible, la nouvelle sélection d'un CN pour l'UE, dans lequel le CN du type identique à celui auquel l'UE a précédemment accédé est le CN local ou le CN global.

3. Procédé selon la revendication 2, dans lequel la nouvelle sélection d'un CN pour l'UE comprend :
la notification à l'UE de se détacher, puis de s'attacher à nouveau au CN nouvellement sélectionné.

4. Procédé selon la revendication 2, dans lequel la nouvelle sélection d'un CN pour l'UE comprend :
la nouvelle sélection du CN pour l'UE pendant la mise à jour d'une zone de suivi.

5. Dispositif d'accès à un réseau central, CN, de déploiement hiérarchique, le dispositif étant compris dans un noeudB évolue, eNB, le dispositif comprenant :
un module de sélection agencé pour :
acquérir une charge d'un CN par détection de bout en bout, ou en étant notifié par le CN de la charge, dans lequel le CN comprend un CN local et un CN global déployés de manière hiérarchique, dans lequel le CN local est géographiquement plus proche de l'eNB que le CN global pour couvrir une zone spécifique, dans lequel le CN global est construit et mis en fonctionnement de manière localisée, dans lequel le CN local est déployé dans la zone spécifique qui comprend au moins l'une parmi une zone peuplée ou une zone avec une collection dense d'équipement de l'Internet des objets, dans lequel la zone spécifique couverte par le CN local est couverte simultanément par le CN global, dans lequel l'eNB est dans la zone spécifique et est connecté à la fois au CN local et au CN global ; et
à un accès initial par un équipement utilisateur, UE, la sélection du CN local ou du CN global pour l'UE selon une politique, dans lequel la politique comprend : à la fois un attribut de l'UE et la charge du CN ; et
un module d'accès agencé pour: autoriser l'UE à accéder au CN local ou au CN global qui a été sélectionné,
dans lequel l'eNB acquiert l'attribut de l'UE dans une signalisation d'accès envoyée par l'UE,
dans lequel l'attribut de l'UE comprend au l'un parmi : un UE de l'Internet des objets, un UE de l'Internet des véhicules, et un UE de faible mobilité,
dans lequel la sélection du CN local ou du CN global pour l'UE selon une politique comprend au moins l'une parmi :
la priorisation de l'UE de l'Internet des objets à admettre dans le CN local ;
la priorisation de l'UE de l'Internet des véhicules à admettre dans le CN global ; ou
la priorisation de l'UE de faible mobilité à admettre dans le CN local.

6. Dispositif selon la revendication 5,
dans lequel le module de sélection est en outre agencé pour: en réponse à la détermination du fait que l'UE est dans un état de veille et sort d'une zone couverte par un eNB de desserte, jusque dans une zone couverte par un autre eNB, la priorisation du fait que l'UE accède à un CN de type identique à celui du CN auquel l'UE a précédemment accédé ; en réponse à la détermination du fait qu'il n'existe aucun CN du type ou que le CN du type est indisponible, la nouvelle sélection d'un CN pour l'UE, dans lequel le CN du type identique à celui auquel l'UE a précédemment accédé est le CN local ou le CN global.

7. Dispositif selon la revendication 6, dans lequel le module de sélection est agencé pour effectuer une nouvelle sélection du CN pour l'UE par
notification à l'UE de se détacher, puis de s'attacher à nouveau au CN nouvellement sélectionné.

8. Dispositif selon la revendication 6, dans lequel le module de sélection est agencé pour effectuer une nouvelle sélection du CN pour l'UE par
une nouvelle sélection du CN pour l'UE pendant la mise à jour d'une zone de suivi.

9. eNB, comprenant le dispositif selon l'une quelconque des revendications 5 à 8.

10. Support de stockage lisible par ordinateur inclus dans un nœud B évolué, eNB, dans lequel sont stockées des instructions exécutables par ordinateur permettant de réaliser le procédé selon l'une quelconque des revendications 1 à 4.
